# EUROPÄISCHE PATENTANMELDUNG

(11) **EP 3 369 484 A1**
(43) Veröffentlichungstag der Anmeldung: **05.09.2018**
(21) Anmeldenummer: 18155028.6
(22) Anmeldetag: 05.02.2018
(51) Int. Cl.: B01L 9/06, B01J 19/12, B01J 3/04

(54) **REAKTIONSBEHÄLTERSYSTEM**

(30) Priorität: 02.03.2017 DE 202017101173 U; 13.06.2017 DE 202017103518 U
(71) Anmelder: MWT AG, 9435 Heerbrugg (CH)
(72) Erfinder: Lautenschläger, Werner, 9435 Heerbrugg (CH); Scholze, Werner, 88316 Isny (DE)
(74) Vertreter: Kiwit, Benedikt

(57) **Zusammenfassung**

Die vorliegende Erfindung betrifft ein Reaktionsbehältersystem (1) aufweisend Reaktionsbehälter (3) mit einem über eine Öffnung (30) nach oben offenen Innenraum (31) zur Aufnahme von Proben (5), ein Rotorelement (6) für Reaktionen, insbesondere für Unterdruckreaktionen, mit einer Rotationsachse (S), wobei das Rotorelement (6) mehrere um die Rotationsache (S) herum verteilt angeordnete Schutzmäntel (4) mit einer Längserstreckung zur lösbaren Aufnahme jeweils eines der Reaktionsbehälter (3) über eine Aufnahmeöffnung (41) der Schutzmäntel (4) aufweist, je Schutzmantel (4) ein Deckelelement (7), welches auf die Aufnahmeöffnung (41) aufsetzbar ist, um den Innenraum (31) jedes Reaktionsbehälters (3) zusammen mit dem zugeordneten Schutzmantel (4) nach außen zu begrenzen. Die Deckelelemente (7) weisen eine erste Öffnung (73) zum Anschluss von Fluidzuführstutzen (80, 90) von außen auf, wobei die erste Öffnung (73) bei in den Schutzmantel (4) eingesetztem Reaktionsbehälter (3) dessen Innenraum (31) mit der Umgebung verbindet, und eine zweite Öffnung (74), welche ausgebildet ist, bei in den Schutzmantel (4) eingesetztem Reaktionsbehälter (3) dessen Innenraum (31) mit einem Vakuumpumpenanschluss (10) zu verbinden.

## Beschreibung

Die vorliegende Erfindung betrifft ein Reaktionsbehältersystem mit einem Rotorelement zur Aufnahme von Reaktionsbehältern.

Reaktionsbehältersysteme mit einem Rotorelement sind aus dem Stand der Technik bekannt. Entsprechende Rotorelemente weisen in der Regel ein Oberteil und ein Unterteil auf, zwischen denen sich Schutzmäntel zur lösbaren Aufnahme von Reaktionsbehältern erstrecken. So ist es bekannt, für unterschiedliche und teils aufeinanderfolgende Verfahrensschritte jeweils ein entsprechend bereitgestelltes Reaktionsbehältersystem vorzusehen. Die eine Probe enthaltenen Reaktionsbehälter werden sodann für die einzelnen Verfahrensschritte jeweils in das entsprechende System eingesetzt und zur Durchführung des darauffolgenden Verfahrens aus diesem System entnommen und in das entsprechend nächste System wieder eingesetzt. So kann in einem ersten Verfahrensschritt in einem ersten System mittels Druckreaktion ein Extraktionsprozess durchgeführt werden. In einem zweiten Schritt kann in einem zweiten System das so gewonnene Extrakt in einem Filtrationsprozess filtriert werden. In einem abschließenden Schritt kann in einem dritten System das so gewonnene Filtrat schließlich in einem Verdampfungsprozess eingeengt werden.

Ausgehend von dem bekannten Stand der Technik ist es nunmehr eine Aufgabe der vorliegenden Erfindung, ein Reaktionsbehältersystem bereitzustellen, welches einen effizienten Verfahrensablauf ermöglicht.

Diese Aufgabe wird durch den Gegenstand des unabhängigen Anspruchs gelöst. Die abhängigen Ansprüche bilden den zentralen Gedanken der Erfindung in besonders vorteilhafter Weise weiter.

Die vorliegende Erfindung betrifft ein Reaktionsbehältersystem. Dieses weist Reaktionsbehälter mit einem über eine Öffnung nach oben offenen Innenraum zur Aufnahme von Proben auf. Des Weiteren weist das Reaktionsbehältersystem ein Rotorelement für Reaktionen (insbesondere für (Unter-)Druckreaktionen) mit einer Rotationsachse auf. Um diese Rotationsachse kann das Rotorelement mittels eines entsprechenden (externen) Antriebes rotiert werden. Das Rotorelement weist mehrere um die Rotationsachse herum verteilt angeordnete Schutzmäntel mit einer Längserstreckung zur lösbaren Aufnahme jeweils eines der Reaktionsbehälter über eine (obere) Aufnahmeöffnung der Schutzmäntel auf. Des Weiteren weist das Reaktionsbehältersystem je Schutzmantel ein Deckelelement auf, welches auf die Aufnahmeöffnung des jeweiligen Schutzmantels aufsetzbar ist, um den Innenraum jedes Reaktionsbehälters mit dem Deckelelement zusammen mit dem zugeordneten Schutzmantel nach außen zu begrenzen und in einer bevorzugten Ausgestaltungsform nach außen abzudichten. Die Deckelelemente weisen eine erste Öffnung und eine zweite Öffnung auf. Die erste Öffnung dient dem Anschluss bzw. der Aufnahme von Fluidzuführstutzen von außen, wobei die erste Öffnung bei in dem Schutzmantel eingesetztem Reaktionsbehälter dessen Innenraum mit der Umgebung verbindet. Die zweite Öffnung ist derart ausgebildet, dass sie bei in den Schutzmantel eingesetztem Reaktionsbehälter dessen Innenraum mit einem Vakuumpumpenanschluss verbinden kann; mithin also den Innenraum mit der Umgebung verbindet, wobei ein Vakuumpumpenanschluss mit der zweiten Öffnung gekoppelt werden kann. Mithin handelt es sich also bezüglich beider Öffnungen um Durchgangsöffnungen, welche das Deckelement - also dessen Wandung - vollständig durchdringen.

Zum Verbinden von Zubehöranschlüssen wie Fluidzuführstutzen bzw. Vakuumpumpenanschluss können die beiden Öffnungen als einfache Durchgangsöffnungen ausgebildet sein, in die die Zubehöranschlüsse eingesteckt werden. Es ist jedoch auch denkbar, dass die Öffnungen Strukturelemente zur Aufnahme entsprechender Zubehöranschlüsse aufweisen, wie bspw. eine Schraubverbindung zum Aufschrauben der Zubehöranschlüsse oder einen vorspringenden Aufnahmestutzen, durch welchen die Öffnung läuft, zum Aufstecken des Zubehöranschlusses. Die Erfindung ist auf die Ausgestaltung der Öffnung zur Aufnahme, zum Anschluss bzw. zum Verbinden der Zubehöranschlüsse nicht beschränkt.

Mittels des erfindungsgemäßen Reaktionsbehältersystems wird es ermöglicht, unterschiedliche Verfahrensschritte mit nur einem System schnell und preisgünstig durchzuführen. Das Vorsehen der entsprechenden Öffnungen in dem Deckelelement ermöglicht den Anschluss unterschiedlicher Zubehörteile. Das System kann somit leicht umgerüstet werden, um somit unterschiedliche Verfahrensschritte in einfacher Weise und mit nur einem System durchführen zu können. Beispielsweise können auf diese Weise nacheinander Filtrations- und Eindampf-Prozesse mit nur einem System und geringem Umrüstaufwand durchgeführt werden. Diese beiden Verfahren finden bevorzugt unter Bildung eines Unterdrucks zur Beschleunigung dieser Verfahren statt, so dass ein entsprechender Vakuumpumpenanschluss an der zweiten Öffnung bei beiden Verfahrensschritten erhalten bleiben kann.

Gemäß einem bevorzugten Aspekt stehen die in die Schutzmäntel eingesetzten Reaktionsbehälter nach oben aus den Schutzmänteln und insbesondere aus deren Aufnahmeöffnung vor. Somit ist es auf einfach Weise für den Anwender möglich, die in die Schutzmäntel eingesetzten Reaktionsbehälter aus diesen zu entnehmen und in diese wieder einzusetzen. Neben der einfachen Handhabung kann somit ein Kontakt des Anwenders mit aggressiven und toxischen Proben bei der Bestückung und Entnahme der Reaktionsbehälter einfach vermieden werden. Die Reaktionsbehälter können mit ihren vorstehenden Bereich von dem Anwender in einfacher Weise von außen gegriffen werden.

Neben der Ausgestaltung des Reaktionsbehältersystems in der Weise, dass die eingesetzten Reaktionsbehälter ständig aus den Schutzmänteln hervorstehen, ist es auch denkbar, längsverschiebliche Stempel im Bodenbereich der Schutzmäntel vorzusehen. Auf diesen liegen die Reaktionsbehälter auf. Die Stempel weisen dann einen unten aus den Schutzmänteln vorstehen Stift auf. Die Stempel können über den Stift in den Schutzmantel eingeschoben werden, wodurch die Reaktionsbehälter wiederum aus dem Schutzmantel angehoben werden. Auch auf diese Weise kann ein einfacher Zugriff zu den Reaktionsbehältern realisiert werden. Die Stifte können dabei derart unten aus den Schutzmänteln vorstehen, dass die Stempel beispielsweise bei Absetzten des Systems auf einer ebenen Oberfläche automatisch angehoben werden. Während der Durchführung von Reaktionen kann das Rotorelement entweder auf einer entsprechenden Rotationsachse angehoben vorgesehen sein oder die Stifte ragen in eine Ausnehmung, damit während des Reaktionsprozesses die Stempel lose in dem Rotorelement ruhen können und die Reaktionsbehälter in dem jeweiligen Schutzmantel abgesenkt sind.

Gemäß einer bevorzugten Ausgestaltungsform kann zwischen Schutzmantel und Deckelelement eine Dichtung vorgesehen sein, um den Innenraum im Verbindungsbereich zwischen Schutzmantel und Deckelelement nach außen abzudichten; insbesondere gasdicht bereitzustellen. Die Dichtung ist bevorzugt auf der die Aufnahmeöffnung begrenzenden Oberkante des Schutzmantels vorgesehen, um vorzugsweise vertikal mit einem Dichtbereich des Deckelements, bevorzugt einem stufenförmigen Bereich desselben, dichtend zusammenzuwirken. Die so bereitgestellte vertikal wirkende Dichtung kann durch einfaches Aufsetzen der Deckelelemente auf den Schutzmänteln automatisch bereitgestellt werden. Wird während der Reaktionen ein Unterdruck im Innenraum erzeugt, so wird die lose Dichtung auch während der Reaktion sicher aufrechterhalten.

Eine die obere Öffnung begrenzende Oberkante des Reaktionsbehälters und/oder ein nach oben aus dem Schutzmantel vorstehender Abschnitt des Reaktionsbehälters ist bevorzugt allseits zu dem Deckelelement beabstandet (also insbesondere nach oben und seitlich). Auf diese Weise wird bevorzugt ein seitlicher Ringspalt zwischen Reaktionsbehälter und Deckelelement gebildet, welcher mit dem Innenraum des Reaktionsbehälters in Verbindung steht. Der Ringspalt kann beispielhaft eine bevorzugte Breite von 0,1-2mm aufweisen, wobei die Erfindung hierauf nicht beschränkt ist. Die zweite Öffnung erstreckt sich dabei bevorzugt von dem Ringspalt (seitlich) weg. Durch die Beabstandung des Deckelements von dem Reaktionsbehälter wird es ermöglicht, dass das Deckelement in einfacher Weise auf die Schutzmäntel aufgesetzt werden kann. Die Bereitstellung des seitlichen Ringspaltes ermöglicht es zudem, bei an der zweiten Öffnung angeschossener Vakuumpumpe im oberen Bereich des Reaktionsbehälters einen möglichst wirbelfreien Fluidstrom zu erzeugen, sodass ein besonders effektiver Prozessablauf ermöglicht werden kann.

Das Reaktionsbehältersystem weist des Weiteren bevorzugt einen Vakuumpumpenanschluss je Reaktionsbehälter auf. Dieser ist beispielsweise in Form einer Schlauch- oder Rohrverbindung bereitgestellt (also mittels Schläuchen oder Rohren). Der Vakuumpumpenanschluss dient dabei dazu, den Innenraum des Reaktionsbehälters mit einer Vakuumpumpe über die zweite Öffnung verbinden zu können. Auf diese Weise wird ein einfacher Anschluss einer Vakuumpumpe zu den einzelnen Innenräumen (bzw. Reaktionsräumen) der Reaktionsbehälter ermöglicht.

Die Vakuumpumpenanschlüsse laufen bevorzugt in einem gemeinsamen Anschlussstutzen zusammen. Dieser ist mit der Vakuumpumpe verbindbar. Der Anschlussstutzen ist dabei ferner bevorzugt über eine relativ zum Anschlussstutzen drehbar und mit diesem dichtend vorgesehene Anschlusskupplung mit der Vakuumpumpe verbindbar. Somit kann jeder der Reaktionsbehälter in einfacher Weise mit einer Vakuumpumpe verbunden werden, auch wenn das Rotorelement für das Probenreaktionsverfahren drehbar vorgesehen ist. Durch das Zusammenführen der Vakuumpumpenanschlüsse aller Reaktionsbehälter kann ein einfacher Aufbau des Systems bereitgestellt werden. Der Anschlussstutzen und/oder die Anschlusskupplung erstrecken sich bevorzugt auf oder entlang der Rotationsachse.

Die Schutzmäntel sind bevorzugt auf einem oder mehreren Teilkreisen oder Kreisen um die Rotationsachse des Rotorelements herum angeordnet. Die Schutzmäntel können des Weiteren über den Umfang des Rotorelements gesehen denselben Abstand zu dem jeweils benachbarten Schutzmantel aufweisen. Zudem können sich die Schutzmäntel im Wesentlichen parallel zueinander und vorzugsweise parallel zur Rotationsachse des Rotorelements erstrecken. Auf diese Weise wird ein im Wesentlichen symmetrisches System bereitgesellt, welches beispielsweise zum automatischen Handling einfach eingesetzt werden kann.

Das Reaktionsbehältersystem kann ferner einen mikrowellenabsorbierenden Ring je Schutzmantel aufweisen, welcher den jeweiligen Schutzmantel bevorzugt wenigstens in einem unteren Bereich und ferner bevorzugt in flächiger Anlage mit dem Schutzmantel umgibt. Der Ring kann hierzu bspw. aus Weflon® hergestellt sein. Der so bereitgestellte Ring kann somit als eine Art Heizquelle dienen, um bspw. unpolare oder schlecht mikrowellenabsorbierende Proben zu erwärmen. Der Ring kann dabei als eine Art Infrarot-Wärmeüberträger bspw. bei einem Verdichtungsprozess dienen. Gleichzeitig kann der Ring für eine exakte und bevorzugt berührungslose Temperaturmessung (bspw. über IR-Sensoren) als schwarzer Körper dienen.

Das Rotorelement kann ein die Schutzmäntel verbindendes (erstes) Rotorteil aufweisen. Dabei kann es sich insbesondere um ein Rotorunterteil handeln. Das Rotorteil ist dabei an dem der Aufnahmeöffnung der Schutzmäntel gegenüberliegenden Enden der Schutzmäntel in Längsachse derselben gesehen vorgesehen. Mithin erstrecken sich also die Schutzmäntel von dem Rotorunterteil nach oben weg und sind bevorzugt mit dem Rotorunterteil lösbar oder fest verbunden. Bei einer lösbaren Verbindung ist ferner bevorzugt eine Dichtung zwischen Rotorunterteil und Schutzmantel vorgesehen, welche einerseits den Inneraum nach außen abdichtet und andererseits als Halterung der Schutzmäntel beim Abheben der oben auf diese aufgesetzten Deckelelemente dient.

Das Rotorelement weist bevorzugt ein die Deckelelemente verbindendes (zweites) Rotorteil auf. Dabei handelt es sich bevorzugt um ein Rotoroberteil, welches ferner bevorzugt mit den daran vorgesehenen Deckelelementen von oben lösbar auf die Schutzmäntel aufsetzbar ist. Auf diese Weise können die Deckelelemente zusammen gehandhabt werden, was das Handling des Systems insgesamt deutlich vereinfacht. So können mit nur einem einzigen Schritt alle Deckelelemente gleichzeitig auf die Schutzmäntel aufgesetzt und mit der Probenreaktion begonnen werden. Sind an diesen Vakuumpumpenanschlüsse vorgesehen, können diese im an die zweite Öffnung angeschlossenen Zustand auch beim Handling verbleiben.

Von dem Rotorunterteil erstrecken sich bevorzugt Positionierstäbe zu dem Rotoroberteil hin, welche in korrespondierende Ausnehmungen im Rotoroberteil eingreifen. Auf diese Weise kann das Rotoroberteil sicher ausgerichtet und fixiert werden. Die Positionierstäbe sind bevorzugt asymmetrisch verteilt auf dem Rotorunterteil vorgesehen, sodass eine eindeutig definierte Positionierung des Rotoroberteils und somit der Deckelelemente zu den Schutzmänteln bzw. Reaktionsbehältern ermöglicht werden kann. Bevorzugt gibt es neben der reinen strukturellen bzw. geometrischen Codierung zwischen Rotoroberteil und Positionierstäben ferner weitere Codierungen, wie beispielsweise eine Farbcodierung, welche eine eindeutige Ausrichtung des Rotoroberteils bzw. der daran angeordneten Deckelelemente zu dem Rotorunterteil bzw. den daran angeordneten Schutzmänteln ermöglicht.

Ein aus dem Rotoroberteil ragendes Ende der Positionierstäbe kann bevorzugt ein Gewinde aufweisen, auf welches jeweils eine Mutter lösbar aufgeschraubt ist, um das Rotoroberteil nach unten in Richtung Rotorunterteil und somit bevorzugt die Dichtung über die Deckelelemente in Richtung der jeweiligen Schutzmäntel auf die die Aufnahmeöffnungen begrenzenden Oberkanten der jeweiligen Schutzmäntel zu drücken. Somit kann das Deckelelement sicher auf der Aufnahmeöffnung der Schutzmäntel aufliegen, um den Innenraum jedes Reaktionsbehälters zusammen mit den zugeordneten Schutzmänteln nach außen zu begrenzen. Liegt des Weiteren die vorbezeichnete Dichtung vor, kann zudem die Abdichtung des Innenraumes nach außen verbessert werden.

Die erste Öffnung verjüngt sich bevorzugt von außen zu dem Innenraum hin. In einer bevorzugten Ausgestaltungsform läuft diese konisch zu. Somit kann ein sicheres einstecken von in die erste Öffnung aufzunehmende Zubehörteile bzw. Zubehöranschlüsse sicher gewährleistet werden. Somit kann insbesondere bei Verfahren, bei denen der Innenraum einem Unterdruck ausgesetzt ist, zudem eine gute Abdichtung des Innenraumes erzielt werden. Zudem bietet die sich verjüngende Form eine Einführschräge, welche das Einsetzen entsprechender Zubehörteile vereinfacht.

Die erste Öffnung erstreckt sich bevorzugt senkrecht oberhalb des Innenraums und insbesondere oberhalb der oberen Öffnung nach oben weg. Somit ist die erste Öffnung direkt auf den Innenraum des Reaktionsbehälters gerichtet, wenn dieser in den Schutzmantel eingesetzt, sodass ein direkter Zugang der zu behandelnden Probe über die erste Öffnung ermöglicht werden kann. Auch kann, wie im Weiteren noch beschrieben wird, das Einführen einer Probe (bspw. Extrakt, Filtrat oder Konzentrat) auf diese Weise einfach mittels Gravitation ermöglicht werden.

Die zweite Öffnung kann (bevorzugt seitlich) in dem Deckelelement vorgesehen sein. Dabei ist die zweite Öffnung weiter bevorzugt unterhalb einer die obere Öffnung begrenzenden Oberkante des Reaktionsbehälters angeordnet. Ist ein zuvor beschriebener Ringspalt zwischen Reaktionsbehälter und Deckelelement vorgesehen, so erstreckt sich die zweite Öffnung besonders bevorzugt (vorzugsweise seitlich) von dem Ringspalt weg. Durch die seitliche Anordnung der zweiten Öffnung insbesondere im Bereich eines vorbeschriebenen Ringspaltes kann eine besonders wirbelfreie Fluidströmung bereitgestellt werden, was eine effektive Probenreaktion zur Folge hat.

Das Reaktionsbehältersystem kann ferner einen Filtrationsaufsatz aufweisen. Der Filtrationsaufsatz weist dabei bevorzugt einen Fluidzuführstutzen und einen Extraktionsbehälter zur Aufnahme einer zu filtrierenden Probe (bspw. Extrakt) auf. Diese können mehrteilig oder integral miteinander ausgebildet sein. Der Fluidzuführstutzen ist mit dem Extraktionsbehälter fluidtechnisch über ein Filterelement verbunden. Der Fluidzuführstutzen ist derart ausgebildet, dass er lösbar mit der ersten Öffnung (fluidtechnisch) verbindbar (bspw. in die erste Öffnung einsetzbar) ist. Somit wird es einfach ermöglicht, mittels Gravitation die Probe vom Extraktionsbehälter über das Filterelement und den Fluidzuführstutzen in den Innenraum des Reaktionsbehälters zu befördern. Da der Filtrationsaufsatz bevorzugt lösbar vorgesehen ist, kann ein der entsprechenden Probenreaktion angepasster Filtrationsaufsatz eingesetzt werden, was die Flexibilität des gesamten Systems weiter erhöht.

Von dem Fluidzuführstutzen erstreckt sich bevorzugt ein Filtereinsatzbereich weg, mit dem der Extraktionsbehälter derart funktional zusammengesetzt (bspw. zusammengesteckt) ist, dass das Filterelement im Filtereinsatzbereich im Bereich zwischen Extraktionsbehälter und Fluidzuführstutzen eingeklemmt ist. Mit anderen Worten kann ein gewünschtes Filterelement wahlweise und auf einfache Weise in den Filtrationsaufsatz eingesetzt werden.

Insgesamt ist somit der Filtrationsaufsatz (ebenso wie der im weiteren beschriebene Verdampfungsaufsatz und andere denkbare Zubehörteile) besonders einfach aufgebaut und kann kostengünstig beispielsweise als Einweg-Artikel bereitgestellt werden. Der Einsatz von Einweg-Artikeln beispielsweise bei Spurenuntersuchungen hat den Vorteil, Verunreinigung bzw. aufwendige Spülarbeiten zu vermeiden und somit insgesamt einen Filtrationsprozess einfach, schnell und kostengünstig durchführen zu können. Durch die zusätzliche Bereitstellung der zweiten Öffnung kann des Weiteren der Filtrationsprozess unter leichtem Vakuum durchgeführt werden, was die Effizienz des Filtrationsprozesses erhöht. Insbesondere die Verwendung von Einweg-Artikeln verhindert Probenverschleppungen beispielsweise für Spuren-Analysen. Der Filtrationsaufsatz kann aus kostengünstigen Materialien wie Glas, Kunststoff (beispielsweise Polypropylen) und dergleichen hergestellt sein. Insbesondere die Verwendung von Glas ist dabei besonders vorteilhaft, da Zubehörteile hieraus bei hohen Temperaturen (> 500°C) hergestellt werden. Beim Recycling entsprechender Behälter werden folglich anhaftende Spezies (Analyten) sicher beseitigt (zerstört). Bereits verwendete Zubehörteile können folglich in einfacher Weise eingeschmolzen, zu neuen Zubehörteilen hergestellt und folglich ohne Kontamination wieder eingesetzt werden.

Das Reaktionsbehältersystem kann des Weiteren einen Verdampfungsaufsatz mit einem Fluidzuführstutzen aufweisen, welcher mit der ersten Öffnung lösbar (fluidtechnisch) verbindbar ist (bspw. in die erste Öffnung lösbar einsetzbar ist). Für einen entsprechenden Verdampfungsprozess sind dann unterschiedliche Arten von weiteren Aufsätzen denkbar. So kann der Verdampfungsaufsatz beispielsweise ferner ein in dem Strömungsweg des Fluidzuführstutzens angeordnetes Filterelement aufweisen. Dabei kann es sich insbesondere um einen Partikelfilter handeln.

Soll der Verdampfungsprozess unter Gas und insbesondere Inertgas (bspw. Stickstoff oder Edelgase wie Argon) durchgeführt werden, sind auch andere Zubehörteile für den Verdampfungsaufsatz denkbar. So kann beispielsweise ein Ringaufsatz bereitgestellt werden, welcher mit (allen) Fluidzuführstutzen verbunden ist. Dabei weist der Ringaufsatz je Fluidzuführstutzen eine Durchgangsöffnung zu dem Fluidzuführstutzen auf; er ist folglich als eine Art "Lochring" gebildet. Des Weiteren weist der Verdampfungsaufsatz ferner einen mit dem Ringaufsatz dichtend und gleitend verbundenen Gleitring auf. Ringaufsatz und Gleitring begrenzen seitlich eine Ringnut bzw. schließen diese zwischen sich ein, in welcher alle Durchgangsöffnungen münden. Die Ringnut wiederum weist einen Gasanschlussstutzen zum Anschluss einer Gaszufuhr auf. Dabei kann es sich insbesondere um eine Inertgaszufuhr handeln. Mittels der Gaszufuhr kann ein Gas über alle so verbundenen Fluidzuführstutzen in den Innenraum der Reaktionsbehälter geleitet werden, auch wenn das Rotorelement zur Probenreaktion beispielsweise in einem Mikrowellenraum eingesetzt und dort rotiert wird, um eine gleichmäßigere Erhitzung der Proben zu gewährleisten.

Die Schutzmäntel und/oder die Reaktionsbehälter und/oder der Filtrationsaufsatz und/oder der Verdampfungsaufsatz (mit Ausnahme der Filterelemente) sind bevorzugt aus Glas, Quarzglas, Quarzkeramik oder auch PTFE oder FEP hergestellt; bevorzugt werden chemisch resistente Materialien eingesetzt. Insbesondere die Herstellung von Schutzmänteln und Reaktionsbehältern aus Glas oder Quarzglas oder transparenten Fluorkunststoffen ermöglichen eine einfache Kontrolle der Probenreaktion durch den Anwender, da er die Proben einfach durch die Behälterwand erkennen kann. Zudem ist einen exakte, berührungslose Temperatur-Kontrolle durch die hohe Transparenz im sichtbaren und IR-Bereich möglich. Auch ist eine visuelle Beobachtung der Verfahrensprozesse durch Gerätefenster oder mittels (eingebauter) Kamera einfach möglich. Auch die Recyclingmöglichkeit von Behältern aus Glas wurde zuvor bereits für die Zubehörteile erläutert und gilt in gleicher Weise für alle Elemente des Systems; insbesondere für Schutzmäntel, Reaktionsbehälter, Filtrationsaufsatz, Verdampfungsaufsatz und sonstige Zubehöranschlüsse und Zubehöraufsätze. Ferner ist der Einsatz Mikrowellen-transparenter Materialien für Reaktionsverfahren in einem Mikrowellenraum vorteilhaft; dies gilt bevorzugt im Wesentlichen für alle Komponenten des Reaktionsbehältersystems.

Die Filterelemente sind bevorzugt aus Glasfaserwolle oder Quarzfaserwolle hergestellt und weiter bevorzugt als Filterscheiben ausgebildet.

Weitere Ausgestaltungen und Vorteile der vorliegenden Erfindung werden anhand der Figuren der begleitenden Zeichnungen im Folgenden beschrieben.

Es zeigen:
- Figur 1: eine perspektivische Ansicht eines Reaktionsbehältersystems gemäß einer ersten Ausführungsform der vorliegenden Erfindung,
- Figur 2: eine seitliche Teilschnittansicht des Reaktionsbehältersystems gemäß Figur 1,
- Figur 3: eine seitliche Teilschnittansicht des Reaktionsbehältersystems gemäß Figur 1 mit eingesetztem Filtrationsaufsatz,
- Figur 4: eine perspektivische Detailansicht des Reaktionsbehältersystems gemäß Figur 3 mit Filteraufsatz in Explosionsdarstellung,
- Figur 5: eine seitliche Teilschnittansicht des Reaktionsbehältersystems gemäß Figur 1 mit einem eingesetztem Verdampfungsaufsatz gemäß einer ersten Ausgestaltungsform,
- Figur 6: eine perspektivische Detailansicht des Reaktionsbehältersystems gemäß Figur 5 mit dem Verdampfungsaufsatz in Explosionsdarstellung,
- Figur 7: eine seitliche Detailansicht des Reaktionsbehältersystems gemäß Figur 1 mit einem aufgesetzten Verdampfungsaufsatz gemäß einer zweiten Ausgestaltungsform,
- Figur 8: eine perspektivische Ansicht eines Reaktionsbehältersystems gemäß einer zweiten Ausführungsform der vorliegenden Erfindung, und
- Figur 9: eine seitliche Teilschnittansicht des Reaktionsbehältersystems gemäß Figur 8.

Die Figuren zeigen unterschiedliche Ausführungsformen eines Reaktionsbehältersystems 1 gemäß der vorliegenden Erfindung. Das Reaktionsbehältersystem 1 weist Reaktionsbehälter 3 auf. Diese wiederum weisen einen über eine obere Öffnung 30 nach oben offenen Innenraum 31 zur Aufnahme von Proben 5 auf. Die Reaktionsbehälter 3 können dabei beispielsweise aus Glas, Quarzglas, Quarzkeramik oder auch PTFE hergestellt sein. Insbesondere Glas bietet sich an, um die Probenreaktion von außen beobachten zu können, sowie eine einfache Temperatur-Kontrolle P4 von außen durchführen zu können.

Des Weiteren weist das Reaktionsbehältersystem 1 ein Rotorelement 6 für Reaktionen - insbesondere für (Unter-)Druckreaktionen - mit einer Rotationsachse S auf. Um diese Rotationsachse S kann das Rotorelement 6 bzw. das Reaktionsbehältersystem 1 gedreht werden. Das Rotorelement 6 weist mehrere um die Rotationsachse S herum verteilte angeordnete Schutzmäntel 4 auf. Die Schutzmäntel 4 wiederum weisen eine Längserstreckung auf, sind also bevorzugt rohrförmig ausgebildet. Die Schutzmäntel 4 dienen der lösbaren Aufnahme jeweils eines der Reaktionsbehälter 3 über eine (obere) Aufnahmeöffnung 41.

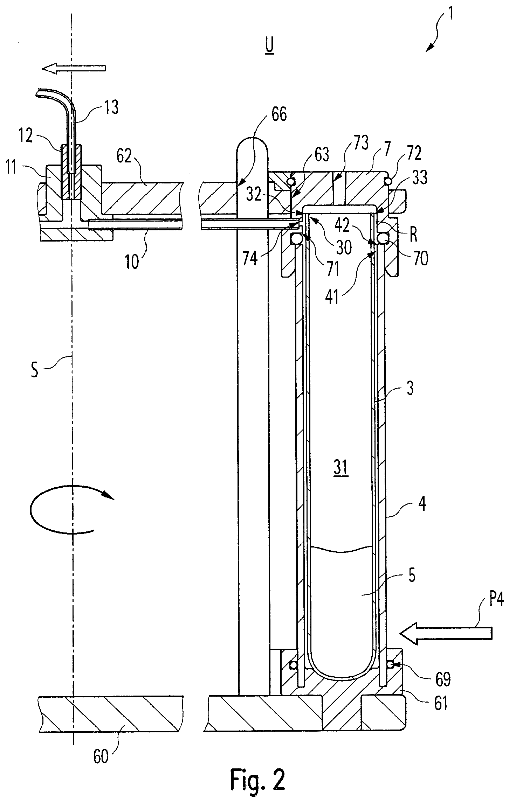

Wie den Figuren 2, 3, 5, 7 und 9 zu entnehmen ist, stehen die in die Schutzmäntel 4 eingesetzten Reaktionsbehälter 3 bevorzugt nach oben aus den Schutzmänteln 4 und insbesondere deren Aufnahmeöffnung 41 vor. Somit können die Reaktionsbehälter in einfacher Weise erreicht und von einem Anwender ergriffen werden. Dies erleichtert das Einsetzen und Entnehmen der Reaktionsbehälter 3.

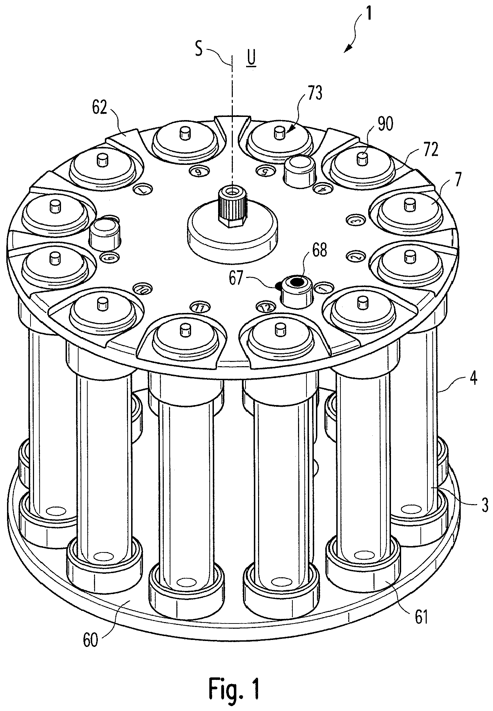

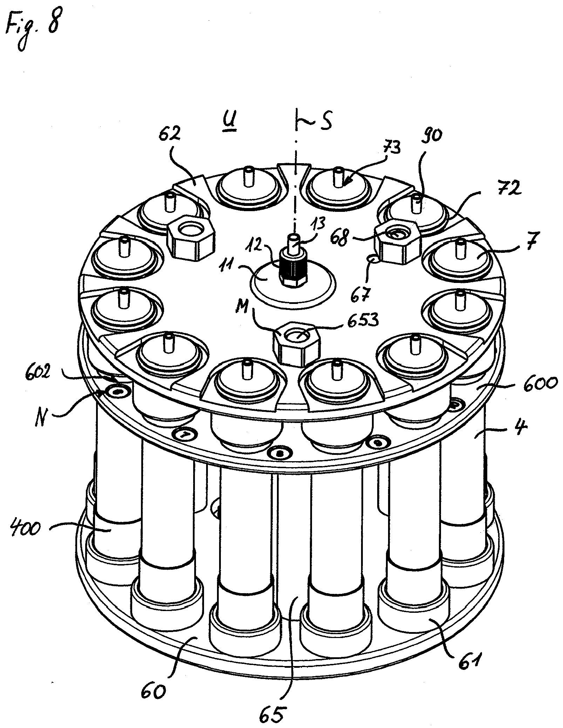

Wie insbesondere den Figuren 1 und 8 zu entnehmen ist, sind die Schutzmäntel 4 auf einem oder auch auf mehreren Teilkreisen oder Kreisen um die Rotationsachse S des Rotorelements 6 herum angeordnet. Dabei weisen die Schutzmäntel 4 über den Umfang des Rotorelements 6 gesehen bevorzugt denselben Abstand zu dem jeweils benachbarten Schutzmantel 4 auf. Die Schutzmäntel 4 erstrecken sich zudem im Wesentlichen parallel zueinander und bevorzugt parallel zur Rotationsachse S des Rotorelements 6, so dass ein insgesamt symmetrisches Reaktionsbehältersystem 1 bereitgestellt wird, um eine gleichmäßige Probenreaktion durchführen zu können.

Wie insbesondere den Figuren 1 und 8 zu entnehmen ist, weist das Rotorelement 6 ferner ein die Schutzmäntel 4 verbindendes (erstes) Rotorteil 60 auf. Dabei handelt es sich insbesondere um ein Rotorunterteil 60, welches an dem der Aufnahmeöffnung 41 gegenüberliegenden Ende der Schutzmäntel 4 in Längsachse derselben gesehen vorgesehen ist. Wie den Figuren zu entnehmen ist, kann das Rotorunterteil 60 bevorzugt Verbindungsbereiche 61 aufweisen, in die die Schutzmäntel 4 eingesetzt sind. Die Schutzmäntel 4 sind dabei bevorzugt lösbar in die Verbindungsbereiche 61 eingesetzt. In diesem Fall ist bevorzugt zwischen Schutzmantel 4 einerseits und Verbindungsbereich 61 andererseits ein Dichtelement 69 vorgesehen, um das Innere der Schutzmäntel nach außen abzudichten und die Schutzmäntel 4 sicher in dem Rotorunterteil 60 zu halten. Hierzu kann ein bevorzugt möglichst starrer O-Ring 69 zum Einsatz kommen.

Je Schutzmantel 4 weist das Reaktionsbehältersystem 1 des Weiteren ein Deckelelement 7 auf, welches auf die Aufnahmeöffnung 41 des jeweiligen Schutzmantels 4 aufsetzbar ist, um dem Innenraum 31 jedes Reaktionsbehälters 3 zusammen mit dem zugeordneten Schutzmantel 4 nach außen zu begrenzen.

Hierzu kann bevorzugt zwischen Schutzmantel 4 einerseits und Deckelelement 7 andererseits eine Dichtung 70 vorgesehen sein, um den Innenraum 31 im Verbindungsbereich zwischen Schutzmantel 4 und Deckelelement 7 nach außen abzudichten. Die Dichtung 70 ist dabei bevorzugt auf der die Aufnahmeöffnung 41 begrenzenden Oberkante 42 des Schutzmantels 4 vorgesehen. Die Dichtung 70 wirkt hier dabei bevorzugt vertikal mit einem Dichtbereich 71 des Deckelelements 7 dichtend zusammen. Bei diesem Dichtbereich 71 kann es sich um einen stufenförmigen Bereich des Deckelelements 7 handeln, welcher sich bei aufgesetztem Deckelelement 7 hier umlaufend oberhalb der Oberkante 42 des Schutzmantels 4 erstreckt. Das Deckelelement 7 kann somit durch einfache Auflage oben auf dem Schutzmantel 4 mit dazwischen angeordneter Dichtung 70 eine dichtende Auflage schaffen. Da die entsprechenden Probenreaktionen in der Regel bei Unterdruck durchgeführt werden, bleibt eine so bereitgestellte Dichtung auch während der Probenreaktion sicher erhalten. Zwar ist eine vertikale Dichtung zwischen Deckel 7 und Schutzmantel 4 bevorzugt, jedoch ist auch eine andere Dichtung denkbar; beispielsweise eine umfangsseitig und seitlich eingeklemmte Dichtung zwischen diesen beiden Elementen 4, 7.

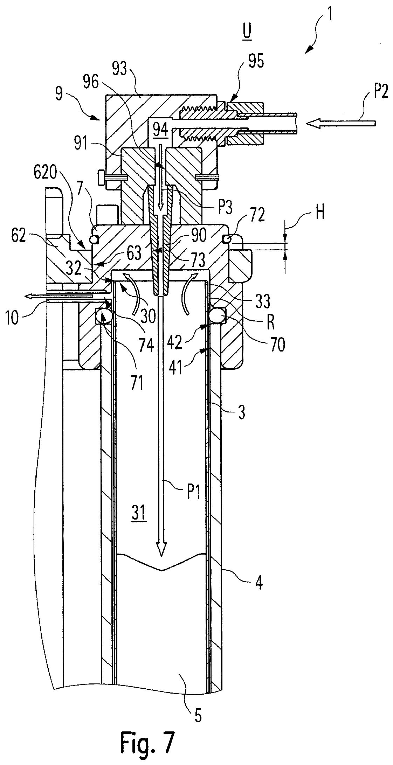

Das Rotorelement 6 kann des Weiteren ein die Deckelelemente 7 verbindendes (zweites) Rotorteil 62 aufweisen. Dabei handelt es sich insbesondere um ein Rotoroberteil 62. In diesem sind die Deckelelemente 7 bevorzugt lösbar angeordnet. Diese können beispielsweise mittels eines Rastvorsprungs 72 durch eine Ausnehmung 63 in dem Rotoroberteil 62 eingeschnappt sein. Bevorzugt kann der Rastvorsprung 72 durch ein im Deckelelement 7 eingesetztes Dichtelement und insbesondere einen O-Ring 72 bereitgestellt sein. Die Deckelelemente 7 sind bevorzugt in Einsetzrichtung mit einem Spiel H (vgl. Figur 7) zwischen Ratsvorsprung 72 und diesem zugewandter Oberfläche 620 des Rotoroberteils 62 in dem Rotoroberteil 62 vorgesehen, so dass unterschiedliche Höhentoleranzen der Schutzmäntel 4 in einfacher Weise ausgeglichen werden können.

Von dem Rotorunterteil 60 erstrecken sich bevorzugt Positionierstäbe 65 zu dem Rotoroberteil 62 hin. Diese greifen dann in korrespondierende Ausnehmungen 66 im Rotoroberteil 62, um das Rotoroberteil 62 und somit die damit verbundenen Deckelelemente 7 sicher und definiert auszurichten und zu fixieren. Die Positionierstäbe 65 sind, wie insbesondere den Figuren 1 und 8 zu entnehmen ist, bevorzugt asymmetrisch verteilt auf dem Rotorunterteil 60 vorgesehen, um somit eine eindeutige Ausrichtung des Rotoroberteils 62 und folglich der Deckelelemente 7 bezüglich der Schutzmäntel 4 und der daran angeordneten Reaktionsbehälter 3 zu ermöglichen. Zur Erleichterung der richtigen Positionierung können Positionierstäbe 65 einerseits und Rotoroberteil 62 andererseits mit einer Farbcodierung 67, 68 oder einer anderen eindeutigen Codierung versehen sein.

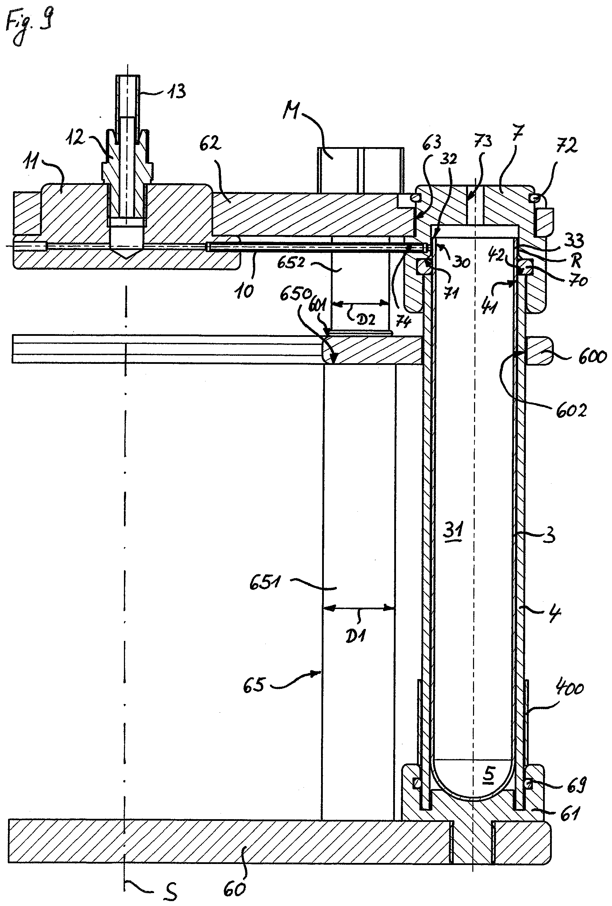

Wie dem Ausführungsbeispiel der Figuren 8 und 9 zu entnehmen ist, können die Positionierstäbe 65 bspw. in einem oberen Bereich gestuft ausgebildet sein, um somit eine nach oben gerichtete Auflagefläche 650 zu bilden. Mithin haben die Positionierstäbe 65 an ihrem dem Rotorunterteil 60 zugewandten Ende einen Abschnitt 651 großen Durchmessers D1 und an ihrem dem Rotoroberteil 62 zugewandten Ende einen Abschnitt 652 kleinen Durchmessers D2, welche durch eine die Auflagefläche 650 bildende Stufe miteinander verbunden sind. Auf die Positionierstäbe 65 kann sodann ein skalierter Ring 600 aufgesetzt sein, welcher den Positionierstäben 65 entsprechende Öffnungen 601 aufweist, welche einen Durchmesser aufweisen, der kleiner als der Durchmesser D1 aber größer als der Durchmesser D2 ist, um auf der Auflagefläche 650 aufzuliegen. Des Weiteren weist der Ring 600 je Reaktionsbehälterstellplatz bzw. je Schutzmantel 4 eine Öffnung 602 auf, durch welche die Schutzmäntel 4 ragen. Jedem Reaktionsbehälterstellplatz ist, wie Figur 8 zu entnehmen ist, bevorzugt eine Nummer N eindeutig zugeordnet.

Das aus dem Rotoroberteil 62 ragende Ende 653 der Positionierstäbe 65 (hier des oberen Abschnitts 652) weist bevorzugt ein Gewinde auf. Auf dieses kann, wie in den Figuren 8 und 9 gezeigt ist, eine Mutter M aufgeschraubt werden. Durch Anziehen der Mutter M drückt diese das Rotoroberteil 62 nach unten in Richtung Rotorunterteil 60 und somit die Deckelelemente 7 in Richtung der jeweiligen Schutzmäntel 4 bzw. die Aufnahmeöffnungen 41 begrenzenden Oberkanten 42 der jeweiligen Schutzmäntel 4. Somit wird durch die zwischen Deckelelement 7 und Schutzmantel 4 eingesetzte Dichtung 70 die Abdichtung durch Anziehen der Muttern M verbessert und während des Betriebes sicher gewährleistet.

Wie insbesondere den Figuren 2, 3, 5, 7 und 9 zu entnehmen ist, weisen die Deckelelemente 7 zwei Öffnungen 73, 74 auf. Eine erste Öffnung 73 dient dabei dem Anschluss und insbesondere der Aufnahme von Fluidzuführstutzen 80,90 von außen, wobei die erste Öffnung 73 bei in den Schutzmantel 4 eingesetztem Reaktionsbehälter 3 dessen Innenraum 31 mit der Umgebung U verbindet.

Die erste Öffnung 73 verjüngt sich bevorzugt von außen zu dem Innenraum 31 hin und läuft besonders bevorzugt konisch zu. Auf diese Weise soll das Einsetzen von im Weiteren noch beschriebenen Zubehörteilen 8, 9 vereinfacht werden. Die erste Öffnung 73 kann jedoch auch Strukturelemente (bspw. Schraubgewinde, Aufsteckstutzen und dergleichen) zum Anschluss der Zubehörteile 8, 9 aufweisen. Zudem befindet sich die erste Öffnung 73 bevorzugt senkrecht oberhalb des Innenraums 31 und insbesondere oberhalb der oberen Öffnung 30 und erstreckt sich in dieser Position nach oben weg. Auf diese Weise kann ein Einführen von Fluiden über die erste Öffnung 73 gezielt in den Innenraum 31 und auf eine darin enthaltene Probe 5 bzw. ein Einführen einer entsprechenden Probe 5 besonders einfach bereitgestellt werden.

Neben der ersten Öffnung 73 weist das Deckelement 7 des Weiteren eine zweite Öffnung 74 auf, welche ausgebildet ist, bei in dem Schutzmantel 4 eingesetztem Reaktionsbehälter 3 dessen Innenraum 31 mit einem Vakuumpumpenanschluss 10 verbinden zu können. Auch die zweite Öffnung 74 kann dabei als einfaches Durchgangsloch ausgebildet oder mit Strukturelementen wie Schraubgewinden und dergleichen versehen sein.

Eine die obere Öffnung 30 begrenzende Oberkante 32 des Reaktionsbehälters 3 und/oder ein nach oben aus dem Schutzmantel 4 vorstehender Abschnitt 33 des Reaktionsbehälters 3 ist bevorzugt allseits zu dem Deckelelement 7 beabstandet vorgesehen. Somit wird bevorzugt ein seitlicher Ringspalt R zwischen Reaktionsbehälter 3 und Deckelelement 7 gebildet. Dieser Ringspalt R wiederum steht mit dem Innenraum 31 des Reaktionsbehälters 3 in Verbindung. Auf diese Weise kann eine möglichst wirbelfreie Fluidführung bei Anlegen eines Unterdrucks an der zweiten Öffnung 74 erzielt werden. Die zweite Öffnung 74 erstreckt sich, wie in den Figuren gezeigt, hier von dem Ringspalt R seitlich weg. Die zweite Öffnung 74 ist dabei bevorzugt seitlich in dem Deckelelement 7 vorgesehen. Besonders bevorzugt ist sie unterhalb einer die obere Öffnung 30 begrenzenden Oberkante 32 des Reaktionsbehälters 3 vorgesehen und erstreckt sich dann besonders bevorzugt seitlich von dem Ringspalt weg.

Das Reaktionsbehältersystem 1 weist des Weiteren den zuvor bereits beschriebenen Vakuumpumpenanschluss 10 je Reaktionsbehälter 3 auf. Dieser liegt insbesondere wenigstens in Form eines Schlauches vor, mit dem der Innenraum mit einer hier nicht dargestellten Vakuumpumpe über die zweite Öffnung 74 verbunden werden kann. Die Vakuumpumpenanschlüsse 10 können, wie in den Figuren 2, 3, 5 und 9 angedeutet ist, in einem gemeinsamen Anschlussstutzen 11 zusammenlaufen, welcher dann wiederum mit der hier nicht dargestellten Vakuumpumpe verbindbar ist. Der Anschlussstutzen 11 ist dabei bevorzugt in dem Rotoroberteil 62 integriert vorgesehen. Somit kann der Anschlussstutzen 11 zusammen mit den Vakuumpumpenanschlüssen 10 und den damit verbundenen Deckelelementen 7 in einfacher Weise gehandhabt werden und gleichzeitig von allen Schutzmänteln 4 abgehoben werden, um somit die Reaktionsbehälter 3 gleichzeitig freizulegen. Dies wiederum führt zu einer besonders einfachen Handhabung des gesamten Reaktionsbehältersystems 1.

Der Anschlussstutzen 11 ist bevorzugt über eine relativ zum Anschlussstutzen 11 drehbar und mit diesem dichtend vorgesehene Anschlusskupplung 12 mit der Vakuumpumpe verbindbar. Der Anschlussstutzen 11 und ebenso die Anschlusskupplung 12 erstrecken sich bevorzugt auf oder entlang der Rotationsachse S.

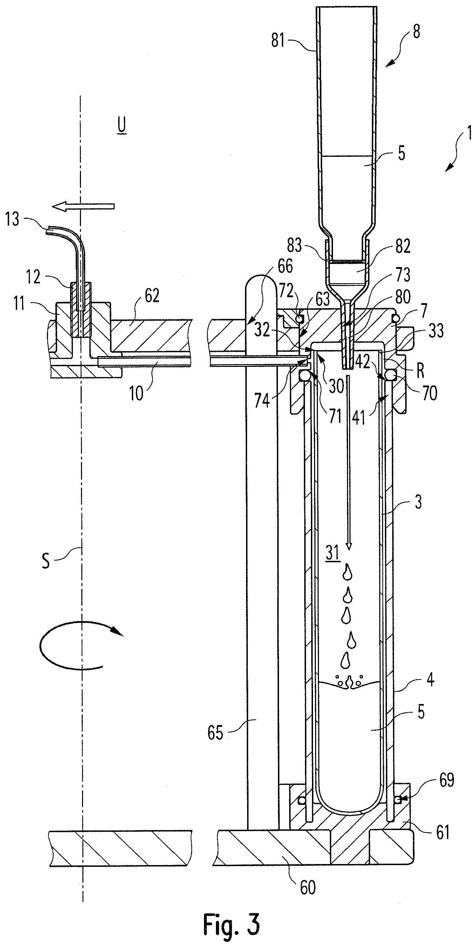

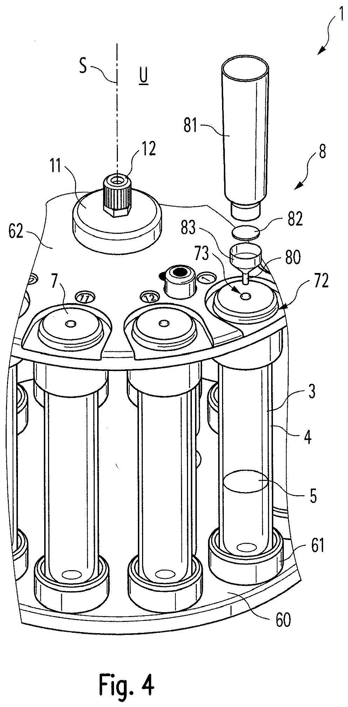

Mit Verweis auf die Figuren 3 und 4 wird nunmehr der Einsatz des Reaktionsbehältersystems 1 für einen Filtrationsprozess beschrieben.

Hierzu weist das Reaktionsbehältersystem 1 bevorzugt einen Filtrationsaufsatz 8 auf. Dieser wiederum weist einen Fluidzuführstutzen 80 sowie einen Extraktionsbehälter 81 zur Aufnahme einer zu filtrierenden Probe (bspw. Extrakt) 5. Fluidzuführstutzen 80 und Extraktionsbehälter 81 sind bevorzugt fluidtechnisch über ein Filterelement 82 miteinander verbunden. Der Fluidzuführstutzen 80 ist, wie insbesondere der Figur 3 zu entnehmen ist, in die erste Öffnung 73 lösbar einsetzbar. Durch diese Anordnung kann der Filtrationsaufsatz 8 in einfacher Weise oben auf das Deckelelement 7 kopfüber aufgesetzt werden. Mittels Gravitation kann sodann die Probe 5 vom Extraktionsbehälter 81 über das Filterelement 82 und den Fluidzuführstutzen 80 in den Innenraum 31 des Reaktionsbehälters 3 befördert werden.

Über die zweite Öffnung 74 kann bei Anschluss einer Vakuumpumpe ein Unterdruck in dem Innenraum 31 für eine schnelle Filtration der Proben 5 erreicht werden. Durch das von dem Extraktionsprozess noch warme Lösemittel (Probe 5) kann während des Filtrationsprozesses gleichzeitig ein Teil des Lösemittels verdampft und abgekühlt werden. In einer bevorzugten Ausgestaltungsform kann ferner eine Vakuum-Kontrolle vorgesehen sein, um Verluste der Analyse-Substanzen (Probe 5) zu vermeiden.

Von dem Fluidzuführstutzen 80 kann sich ein Filtereinsatzbereich 83 hier nach oben weg erstrecken. Dieser Filtereinsatzbereich 83 kann dann mit dem Extraktionsbehälter 81 derart funktional zusammenwirken und insbesondere zusammengesteckt werden, dass das Filterelement 82 im Filtereinsatzbereich 83 im Bereich zwischen Extraktionsbehälter 81 und Fluidzuführstutzen 80 eingeklemmt ist.

Als Filterelemente 82 können beispielsweise vorgefertigte Filterscheiben, die dem Filtereinsatzbereich 83 passend ausgestaltet sind, eingesetzt werden. Auch sind Filterelemente 82 in Form von Glas- bzw. Quarzfaser-Wolle denkbar. Bei Einsatz von Filterelementen 82 der letztgenannten Art ist es ferner denkbar, dass Filtermaterial zwischen zwei Lochplatten in dem Filtereinsatzbereich 83 vorzusehen, zwischen denen das Filterelement 82 durch funktionales Zusammenwirken von Filtereinsatzbereich 83 und Extraktionsbehälter 81 eingeklemmt ist.

Die Bestandteile des Filtrationsaufsatzes 8 und insbesondere der Fluidzuführstutzen 80 mit Filtereinsatzbereich 83 sowie der Extraktionsbehälter 81 sind bevorzugt aus kostengünstigen Materialien wie beispielsweise Kunststoff (Polypropylen) oder einem anderen resistenten Material wie beispielsweise Glas oder anderen Kunststoffen hergestellt.

Der Filtrationsvorgang findet in der Regel ohne Mikrowellenheizung außerhalb eines Mikrowellen-Probenraumes statt.

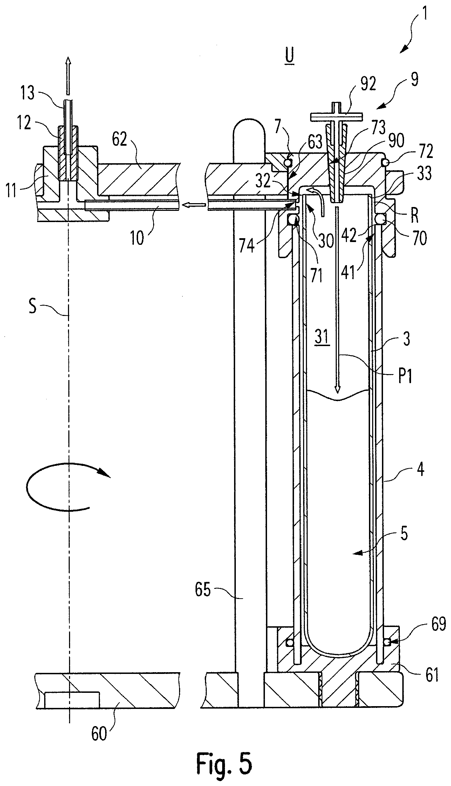

Im Folgenden wird unter Bezugnahme auf die Figuren 5 bis 7 ein Verdampfungsprozess sowie die hierfür erforderlichen Bauteile beschrieben.

Hierzu kann das Reaktionsbehältersystem 1 einen Verdampfungsaufsatz 9 mit einem Fluidzuführstutzen 90 aufweisen. Der Fluidzuführstutzen 90 ist dabei in die erste Öffnung 73 lösbar einsetzbar, wie es auch der Fluidzuführstutzen 80 des Filtrationsaufsatzes 8 ist.

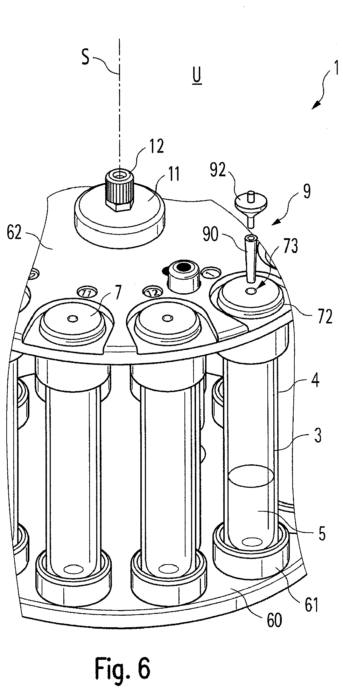

Mit Verweis auf die Figuren 5 und 6 ist es denkbar, dass der Verdampfungsaufsatz 9 ferner ein in dem Strömungsweg des Fluidzuführstutzens 90 angeordnetes Filterelement 92 aufweist. Hierbei kann es sich beispielsweise um einen Partikelfilter handeln.

Das Verdampfen bzw. Einengen der Probe (Extrakt, Filtrat, Konzentrat) 5 erfolgt bevorzugt unmittelbar nach der Filtration, so dass hierzu lediglich der Filtrationsaufsatz 8 durch den Verdampfungsaufsatz 9 ersetzt werden muss. Der Umbau nimmt dabei nur kurze Zeit in Anspruch, in dem die einfach als Einsteckmodule ausgebildeten Aufsätze 8, 9 wahlweise in die erste Öffnung 73 des Deckelelements 7 eingesteckt werden.

Auch der Verdampfungsprozess findet bevorzugt unter Vakuum statt, so dass das Reaktionsbehältersystem 1 über den Vakuumpumpenanschluss 10, welcher über die zweite Öffnung 74 mit dem Innenraum 31 des Reaktionsbehälters 3 verbunden ist, an eine Vakuumpumpe angeschlossen ist.

Zum Verdampfen der Probe (bspw. Filtrat zu Konzentrat) 5 muss diese erhitzt werden. Hierzu wird das Reaktionsbehältersystem 1 bevorzugt rotierend in einem Mikrowellenraum angeordnet. Der Verdampfungsprozess findet dabei bevorzugt unter exakter Temperaturkontrolle P4 statt, so dass sowohl die Schutzmäntel 4 als auch die Reaktionsbehälter 3 bevorzugt aus einem transparenten Material wie beispielsweise Glas oder Quarz hergestellt sind. Diese lassen sich zudem in kostengünstiger Weise als Einweg-Artikel bereitstellen und recyceln.

Wie insbesondere dem Ausführungsbeispiel der Figuren 8 und 9 zu entnehmen ist, kann das Reaktionsbehältersystem 1 ferner wahlweise einen mikrowellenabsorbierenden Ring 400 (je Schutzmantel 4) aufweisen. Dieser umgibt den jeweiligen Schutzmantel 4 bevorzugt wenigstens in einem unteren Bereich und ferner bevorzugt in flächiger Anlage mit dem Schutzmantel 4. Der Ring 400 ist bevorzugt aus Weflon® hergestellt. Der Ring 400 kann hierzu bspw. einfach auf den entsprechenden Schutzmantel 4 aufgesetzt werden und auf dem zugehörigen Verbindungsbereich 61 oben aufliegen. Der so bereitgestellte Ring 400 kann somit als eine Art Heizquelle dienen, um bspw. unpolare oder schlecht mikrowellenabsorbierende Proben (Substanzen, Lösungen und Stoffe) 5 zu erwärmen. Gleichzeitig kann der Ring 400 zu einer exakten Temperaturmessung als schwarzer Körper dienen.

Der schnelle und effiziente Verdampfungsvorgang erfolgt bevorzugt unter Vakuum- und Temperatur-Kontrolle P4. Das ist notwendig, um Verluste der zu analysierenden Proben bzw. Substanzen 5 zu verhindern. Dies wird zusätzlich durch Anblasen auf die Flüssigkeitsoberfläche, wie mit dem Pfeil P1 in Figur 5 und 7 beispielhaft verdeutlicht, erzielt. Auf diese Weise wird die Oberflächengrenzschicht abgekühlt und nur die erwärmten Lösemitteldämpfe mit hoher Bewegungsenergie durchdringen die Oberfläche. Durch diesen Effekt wird eine praktisch vollständige Wiederfindung der zu analysierenden Substanzen erreicht. Typische Beispiele zur Analyse sind die Bestimmung von Pestiziden, Insektiziden und so weiter im Spurenbereich.

Um während des Verdampfungsprozesses konstant einen Unterdruck im Innenraum 31 zu erzeugen, laufen die Vakuumpumpenanschlüsse 10 aller Reaktionsbehälter bevorzugt in einem gemeinsamen zentralen Anschlussstutzen 11 zusammen, welcher wiederum drehbar und dichtend mit einer Anschlusskupplung 12 verbunden ist, welche zu einer hier nicht dargestellten Vakuumpumpe führt. Die Verbindung von Anschlusskupplung 12 und Vakuumpumpe kann hier beispielsweise mittels eines PTFE-Schlauches 13 erfolgen. Indem ein gemeinsamer Anschluss 11, 12 zu einer Vakuumpumpe bereitgestellt wird, kann eine gleiche Temperatur- und Verdampfungsrate in allen Reaktionsbehältern 3 gewährleistet werden.

Mit Verweis auf Figur 7 ist eine alternative Ausgestaltung des Verdampfungsaufsatzes 9 gezeigt, welcher für Verdampfen unter Inertgas vorgesehen ist. Dabei sind die Fluidzuführstutzen 90 mit einem Ringaufsatz 91 verbunden, welcher je Fluidzuführstutzen 90 eine Durchgangsöffnung 96 zu dem jeweiligen Fluidzuführstutzen 90 aufweist. Des Weiteren weist dieser Verdampfungsaufsatz 9 ferner einen mit dem Ringaufsatz 91 dichtend und gleitend verbundenen Gleitring 93 mit einer von Ringaufsatz 91 und Gleitring 93 seitlich begrenzten Ringnut 94 auf, in welcher alle Durchgangsöffnungen 92 münden. Die Ringnut 94 wiederum weist einen Gasanschlussstutzen 95 zum Anschluss einer Gaszufuhr auf. Dabei handelt es sich besonders bevorzugt um eine Inertgaszufuhr. Auf diese Weise kann ein Gas P2, P3 über alle so verbundenen Fluidzuführstutzen 90 in den Innenraum 31 des Reaktionsbehälters 3 und bevorzugt direkt auf die Oberfläche der Probe 5 (P1) geleitet werden.

Der Widerstand von Filterelementen 91 und/oder Gasführungsrohren und/oder Gasanschlussstutzen 95 und dergleichen erzeugt in dem Reaktionsbehälter 3 einen Unterdruck und senkt somit die Verdampfungstemperatur der Probe 5 bzw. Lösemittels. Gleichzeitig bläst das Transportgas auf die Proben-Oberfläche (vgl. Pfeil P1) und beschleunigt so die Verdampfungsrate durch schnellen Abtransport.

Mit dem erfindungsgemäßen Reaktionsbehältersystem 1 ist es somit in einfacher und kostengünstiger Weise möglich, dieses als Filtrations-System einerseits und auch als Verdampfungs-System andererseits oder auch für andere Zwecke entsprechend bereitzustellen. Hierzu müssen lediglich die entsprechenden Zubehörteile 8, 9 mit der ersten Öffnung 73 funktional und fluidtechnisch verbunden/angeschlossen werden. Dies gilt in gleicher Weise für das Reaktionsbehältersystem 1 gemäß dem zweiten Ausführungsbeispiel, so dass vollumfänglich auf vorhergehende Ausführungen verwiesen wird.

Die vorliegende Erfindung ist auf das vorbeschriebene Ausführungsbeispiel nicht beschränkt, sofern sie vom Gegenstand der folgenden Ansprüche umfasst ist. Insbesondere ist die vorliegende Erfindung nicht auf Anzahl und Ausgestaltung der einzelnen Komponenten des Reaktionsbehältersystems 1 beschränkt. Die einzelnen Komponenten des Reaktionsbehältersystems 1 können aus beliebigen Materialien hergestellt sein, welche für den vorgesehenen Zweck und die jeweiligen Probenreaktionen geeignet sind. Dabei sind insbesondere chemisch resistente Materialien bevorzugt. Für eine Kontrolle und insbesondere eine Temperatur-Kontrolle der Probe 5 während des Verfahrens sind transparente Materialien bevorzugt. Hierbei kommen bevorzugt transparente Materialien wie Glas und Quarz oder auch transparente Fluorkunststoffe wie Fluorethylenpropylen (FEP) zum Einsatz. Auch sind Kunststoffe wie Polypropylen (PP) oder Polyethylen (PE) denkbar. Ebenso ist die Anordnung und die Ausgestaltung der ersten und zweiten Öffnung 73, 74 grundsätzlich durch die Erfindung nicht beschränkt, sofern sie eine Verbindung zu dem Innenraum 31 von außen ermöglichen und einen Anschluss für entsprechende Zubehörteile 8, 9 bzw. Vakuumpumpenanschlüsse 10 ermöglichen.

## Patentansprüche

1. Reaktionsbehältersystem (1) aufweisend:
Reaktionsbehälter (3) mit einem über eine Öffnung (30) nach oben offenen Innenraum (31) zur Aufnahme von Proben (5),
ein Rotorelement (6) für Reaktionen, insbesondere für Unterdruckreaktionen, mit einer Rotationsachse (S), wobei das Rotorelement (6) mehrere um die Rotationsache (S) herum verteilt angeordnete Schutzmäntel (4) mit einer Längserstreckung zur lösbaren Aufnahme jeweils eines der Reaktionsbehälter (3) über eine Aufnahmeöffnung (41) der Schutzmäntel (4) aufweist,
je Schutzmantel (4) ein Deckelelement (7), welches auf die Aufnahmeöffnung (41) aufsetzbar ist, um den Innenraum (31) jedes Reaktionsbehälters (3) zusammen mit dem zugeordneten Schutzmantel (4) nach außen zu begrenzen,
wobei die Deckelelemente (7)
• eine erste Öffnung (73) zum Anschluss von Fluidzuführstutzen (80, 90) von außen aufweisen, wobei die erste Öffnung (73) bei in den Schutzmantel (4) eingesetztem Reaktionsbehälter (3) dessen Innenraum (31) mit der Umgebung verbindet, und
• eine zweite Öffnung (74) aufweisen, welche ausgebildet ist, bei in den Schutzmantel (4) eingesetztem Reaktionsbehälter (3) dessen Innenraum (31) mit einem Vakuumpumpenanschluss (10) zu verbinden.

2. Reaktionsbehältersystem (1) nach Anspruch 1, wobei die in die Schutzmäntel (4) eingesetzten Reaktionsbehälter (3) nach oben aus den Schutzmänteln (4), insbesondere deren Aufnahmeöffnung (41), vorstehen.

3. Reaktionsbehältersystem (1) nach Anspruch 1 oder 2, wobei zwischen Schutzmantel (4) und Deckelelement (7) eine Dichtung (70) vorgesehen ist, um den Innenraum (31) im Verbindungsbereich zwischen Schutzmantel (4) und Deckelelement (7) nach außen abzudichten, wobei die Dichtung (70) bevorzugt auf der die Aufnahmeöffnung (41) begrenzenden Oberkante (42) des Schutzmantels (4) vorgesehen ist, um vorzugsweise vertikal mit einem Dichtbereich (71) des Deckelements (7), bevorzugt einem stufenförmigen Bereich desselben, dichtend zusammenzuwirken.

4. Reaktionsbehältersystem (1) nach einem der vorhergehenden Ansprüche, wobei eine die obere Öffnung (30) begrenzende Oberkante (31) des Reaktionsbehälters (3) und/oder ein nach oben aus dem Schutzmantel (4) vorstehender Abschnitt (33) des Reaktionsbehälters (3) allseits zu dem Deckelelement (7) beabstandet ist, um einen seitlichen Ringspalt (R) zwischen Reaktionsbehälter (3) und Deckelelement (7) zu bilden, welcher mit dem Inneraum (31) des Reaktionsbehälters (3) in Verbindung steht, wobei sich bevorzugt die zweite Öffnung (74) von dem Ringspalt (R) weg erstreckt.

5. Reaktionsbehältersystem (1) nach einem der vorhergehenden Ansprüche, ferner aufweisend einen Vakuumpumpenanschluss (10) je Reaktionsbehälter (3) insbesondere in Form eines Schlauches, zum Verbinden des Innenraums (31) mit einer Vakuumpumpe über die zweite Öffnung (74),
wobei die Vakuumpumpenanschlüsse (10) vorzugsweise in einem gemeinsamen Anschlussstutzen (11) zusammenlaufen, welcher mit einer Vakuumpumpe verbindbar ist, wobei der Anschlussstutzen (11) ferner bevorzugt über eine relativ zum Anschlussstutzen (11) drehbar und mit diesem dichtend vorgesehene Anschlusskupplung (12) mit der Vakuumpumpe verbindbar ist, und wobei der Anschlussstutzen (11) und/oder die Anschlusskupplung (12) sich auf oder entlang der Rotationsachse (S) erstrecken.

6. Reaktionsbehältersystem (1) nach einem der vorhergehenden Ansprüche, wobei die Schutzmäntel (4) auf einem oder mehreren Teilkreisen oder Kreisen um die Rotationsachse (S) des Rotorelements (6) herum angeordnet sind, und/oder
wobei die Schutzmäntel (4) über den Umfang des Rotorelements (6) gesehen denselben Abstand zu dem jeweils benachbarten Schutzmantel (4) aufweisen, und/oder
wobei sich die Schutzmäntel (4) im Wesentlichen parallel zueinander und vorzugsweise parallel zur Rotationsache (S) des Rotorelements (6) erstrecken.

7. Reaktionsbehältersystem (1) nach einem der vorhergehenden Ansprüche, ferner aufweisend einen mikrowellenabsorbierenden Ring (400) je Schutzmantel (4), welcher den jeweiligen Schutzmantel (4) bevorzugt wenigstens in einem unteren Bereich und ferner bevorzugt in flächiger Anlage mit dem Schutzmantel (4) umgibt.

8. Reaktionsbehältersystem (1) nach einem der vorhergehenden Ansprüche, wobei das Rotorelement (6) ein die Schutzmäntel (4) verbindendes Rotorteil (60) aufweist, insbesondere ein Rotorunterteil (60), welches an dem der Aufnahmeöffnung (41) gegenüberliegenden Ende der Schutzmäntel (4) in Längsachse derselben gesehen vorgesehen ist.

9. Reaktionsbehältersystem (1) nach einem der vorhergehenden Ansprüche, wobei das Rotorelement (6) ein die Deckelelemente (7) verbindendes Rotorteil (62) aufweist, insbesondere ein Rotoroberteil (62).

10. Reaktionsbehältersystem (1) nach Anspruch 8 und 9, wobei sich von dem Rotorunterteil (60) Positionierstäbe (65) zu dem Rotoroberteil (62) hin erstrecken, welche in korrespondierende Ausnehmungen (66) im Rotoroberteil (62) eingreifen, wobei die Positionierstäbe (66) bevorzugt asymmetrisch verteilt auf dem Rotorunterteil (60) vorgesehen sind,
wobei vorzugsweise ein aus dem Rotoroberteil (62) ragendes Ende (653) der Positionierstäbe (65) ein Gewinde aufweist, auf welches jeweils eine Mutter (M) lösbar aufgeschraubt ist, um das Rotoroberteil (62) nach unten in Richtung Rotorunterteil (60) und somit bevorzugt die Dichtung (70) über die Deckelelemente (7) in Richtung der jeweiligen Schutzmäntel (4) auf die die Aufnahmeöffnungen (41) begrenzenden Oberkanten (42) der jeweiligen Schutzmäntel (4) drückt.

11. Reaktionsbehältersystem (1) nach einem der vorhergehenden Ansprüche, wobei sich die erste Öffnung (73) von außen zu dem Innenraum (31) hin verjüngt, bevorzugt konisch zuläuft, und/oder
wobei sich die erste Öffnung (73) senkrecht oberhalb des Innenraumes (31) und insbesondere oberhalb der oberen Öffnung (30) nach oben weg erstreckt.

12. Reaktionsbehältersystem (1) nach einem der vorhergehenden Ansprüche, wobei die zweite Öffnung (74) bevorzugt seitlich in dem Deckelelement (7) vorgesehen ist, bevorzugt unterhalb einer die obere Öffnung (30) begrenzenden Oberkante (32) des Reaktionsbehälters (3), besonders bevorzugt sich vorzugsweise seitlich von dem Ringspalt (R) weg erstreckt.

13. Reaktionsbehältersystem (1) nach einem der vorhergehenden Ansprüche, ferner aufweisend einen Filtrationsaufsatz (8) mit einem Fluidzuführstutzen (80) und einem Extraktionsbehälter (81) zur Aufnahme einer zu filtrierenden Probe (5), welche fluidtechnisch über ein Filterelement (82) miteinander verbunden sind, wobei der Fluidzuführstutzen (80) mit der ersten Öffnung (73) lösbar verbindbar ist, um bevorzugt mittels Gravitation die Probe (5) vom Extraktionsbehälter (81) über das Filterelement (82) und den Fluidzuführstutzen (80) in den Innenraum (31) des Reaktionsbehälters (3) zu befördern,
wobei vorzugsweise sich von dem Fluidzuführstutzen (80) ein Filtereinsatzbereich (83) weg erstreckt, mit dem der Extraktionsbehälter (81) derart funktional zusammengesteckt ist, dass das Filterelement (82) im Filtereinsatzbereich (83) im Bereich zwischen Extraktionsbehälter (81) und Fluidzuführstutzen (80) eingeklemmt ist.

14. Reaktionsbehältersystem (1) nach einem der vorhergehenden Ansprüche, ferner aufweisend einen Verdampfungsaufsatz (9) mit einem Fluidzuführstutzen (90), welcher mit der ersten Öffnung (73) lösbar verbindbar ist, wobei
• der Verdampfungsaufsatz (9) ferner ein in dem Strömungsweg des Fluidzuführstutzes (90) angeordnetes Filterelement (92), insbesondere einen Partikelfilter, aufweist, oder
• die Fluidzuführstutzen (90) mit einem Ringaufsatz (91) verbunden sind, welcher je Fluidzuführstutzen (90) eine Durchgangsöffnung (96) zu dem Fluidzuführstutzen (90) aufweist, und ferner aufweisend einen mit dem Ringaufsatz (91) dichtend und gleitend verbundenen Gleitring (93) mit einer von Ringaufsatz (91) und Gleitring (93) seitlich begrenzten Ringnut (94), in welche alle Durchgangsöffnungen (96) münden, wobei die Ringnut (94) wiederum einen Gasanschlussstutzen (95) zum Anschluss einer Gaszufuhr, insbesondere einer Inertgaszufuhr, aufweist, um ein Gas über alle so verbundenen Fluidzuführstutzen (90) in den Innenraum (31) der Reaktionsbehälter (3) zu leiten.

15. Reaktionsbehältersystem (1) nach einem der vorhergehenden Ansprüche, wobei die Schutzmäntel (4) und/oder die Reaktionsbehälter (3) und/oder der Filtrationsaufsatz (8) und/oder der Verdampfungsaufsatz (9) mit Ausnahme der Filterelemente (82, 92) aus einem transparenten und bevorzugt chemisch resistenten Material, wie beispielsweise aus Glas oder Quarzkeramik oder transparentem Fluorkunststoff oder PTFE, hergestellt sind, und/oder wobei die Filterelemente (82, 92) aus Glasfaserwolle oder Quarzfaserwolle hergestellt und bevorzugt als Filterscheiben ausgebildet sind.
